# EUROPÄISCHE PATENTANMELDUNG

(11) **EP 2 204 314 A2**
(43) Veröffentlichungstag der Anmeldung: **07.07.2010**
(21) Anmeldenummer: 09016083.9
(22) Anmeldetag: 29.12.2009
(51) Int. Cl.: B62J 11/00

(54) **Zwischenbau-Sicherungselement für Zweirad-Geräteträger**

(30) Priorität: 02.01.2009 DE 202009000212 U
(71) Anmelder: Richter, Harald, 75331 Engelsbrand (DE)
(72) Erfinder: Richter, Harald, 75331 Engelsbrand (DE)
(74) Vertreter: Gallo, Wolfgang

(57) **Zusammenfassung**

Zwischenbau-Sicherungselement für Zweirad-Geräteträger für Mobiltelefone, Navigationsgeräte und dgl., bestehend aus einem Zwischenbaukörper (1), der zwischen einen Trägersockel (5) und einen Gerätehalter (9) einzusetzen ist, wobei der Zwischenbaukörper (1) an einer Seite mit zu Kupplungselementen am Trägersockel komplementären Kupplungselementen und auf seiner entgegengesetzten Seite mit zu Kupplungselementen am Gerätehalter (9) komplementären Kupplungselementen (8) versehen ist, und mit einem am Zwischenbaukörper (1) angeordneten Spannmittel (2), das über das im Gerätehalter (9) eingelegte Gerät legbar und wiederum am Zwischenbaukörper fixierbar ist.

## Beschreibung

Halter für Mobiltelefone, Smartphones, mobile Navigationsgeräte und dergleichen bestehen üblicherweise aus einem Klemmbacken-Gerätehalter, der mit einer Schnellkupplung lösbar auf einem Trägersockel sitzt. Der Trägersockel ist bei Kraftfahrzeug-Geräteträgern gewöhnlich mit einem Saugfuß zum Anbringen an der Windschutzscheibe ausgestattet; bei Zweirad-Halter ist er gewöhnlich mit einem Klemm- oder Spannmechanismus zum Fixieren an der Lenkstange ausgebildet.

Zwar hält der Klemmbacken-Gerätehalter das betreffende Mobiltelefon oder sonstige Gerät mit seinen gewöhnlich durch Moosgummi-Auflagen gepolsterten Klemmbacken auf dem Gerätehalter eingespannt, aber im Hinblick auf das mögliche Auftreten stärkerer Erschütterungen beim Fahren erscheint es wünschenswert, eine Sicherung gegen ungewolltes Lösen des Geräts vom Gerätehalter und Wegschleudern des Geräts in solchen Fällen vorzusehen.

Aufgabe der Erfindung ist es, eine zweckmäßige und auch ohne weiteres nachrüstbare Lösung für dieses Problem zu schaffen.

Diese Aufgabe wird gemäß der Erfindung durch das im Anspruch 1 angegebene Sicherungselement gelöst.

Vorteilhafte Ausgestaltungen des Sicherungselements sind Gegenstand der Unteransprüche.

Das erfindungsgemäße Sicherungselement ist als Zwischenbauelement zwischen dem Gerätehalter und dem Trägersockel konzipiert, bestehend aus einem Plattenkörper, der an seiner Oberseite und an seiner Unterseite mit den gleichen Schnellkupplungselementen wie der Trägersockel an seiner Oberseite und der Gerätehalter an seiner Unterseite versehen ist, so dass der Plattenkörper einfach wahlweise zwischen dem Gerätehalter und dem Trägersockel eingesetzt werden kann.

Weiter weist das Sicherungselement ein Gummispannband oder einen Spannbügel oder dergleichen auf, um das in den Gerätehalter eingelegte Gerät in diesem zu sichern.

Ein Ausführungsbeispiel des erfindungsgemäßen Zwischenbau-Sicherungselements ist in den anliegenden Zeichnungen dargestellt und wird unter Bezugnahme auf diese Zeichnungen nachstehend mehr im einzelnen beschrieben.

In den Zeichnungen zeigen:
- Fig. 1: das erfindungsgemäße Zwischenbau-Sicherungselement in Untersicht, und
- die Fig. 2 bis 10: die Handhabung des erfindungsgemäßen Sicherungselements beim Zwischensetzen zwischen einem Trägersockel und einem Klemmbacken-Gerätehalter, beim Einlegen des Geräts (z.B. Mobiltelefon) und beim Sichern des Geräts.

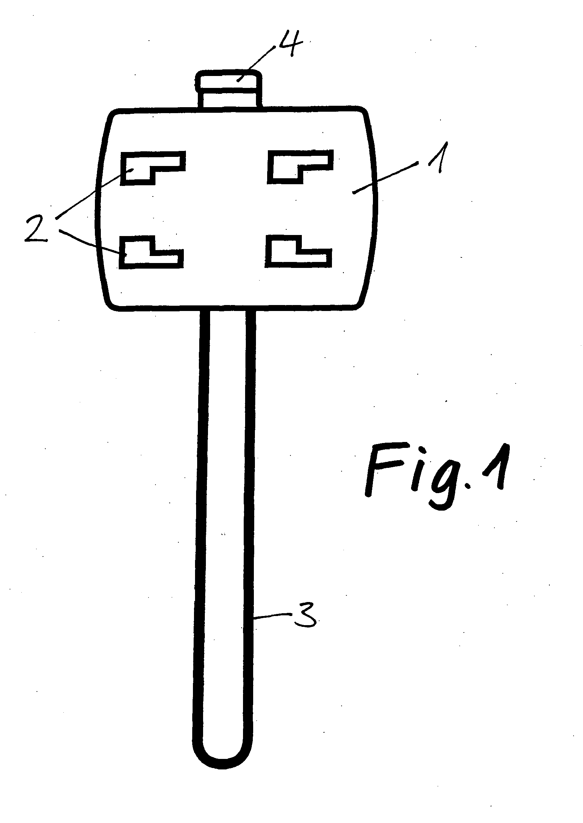

Fig. 1 zeigt in Untersicht ein Zwischenbau-Sicherungselement nach der Erfindung, bestehend aus einem Plattenkörper 1, der an seiner sichtbaren Unterseite eine Anordnung von vier Schnellkupplungselementen in Gestalt von Aufnahme- und Rastöffnungen 2 aufweist und an seiner nicht sichtbaren Oberseite eine komplementäre Anordnung von vier Schnellkupplungselementen in Gestalt von Krallen aufweist, die mit Aufnahme- und Rastöffnungen entsprechend den Aufnahme- und Rastöffnungen 2 gestellt sind, kuppelnd zusammenwirken können, einem Gummispannband 3, das von einem Seitenkantenbereich des Plattenkörpers 1 wegragt, und einer Einhängenase 4, die auf der vom Gummispannband 3 entgegengesetzten Seitenkantenbereich des Plattenkörpers 1 angeformt ist und zum Einhängen des Endes des Gummispannbands 3 dient.

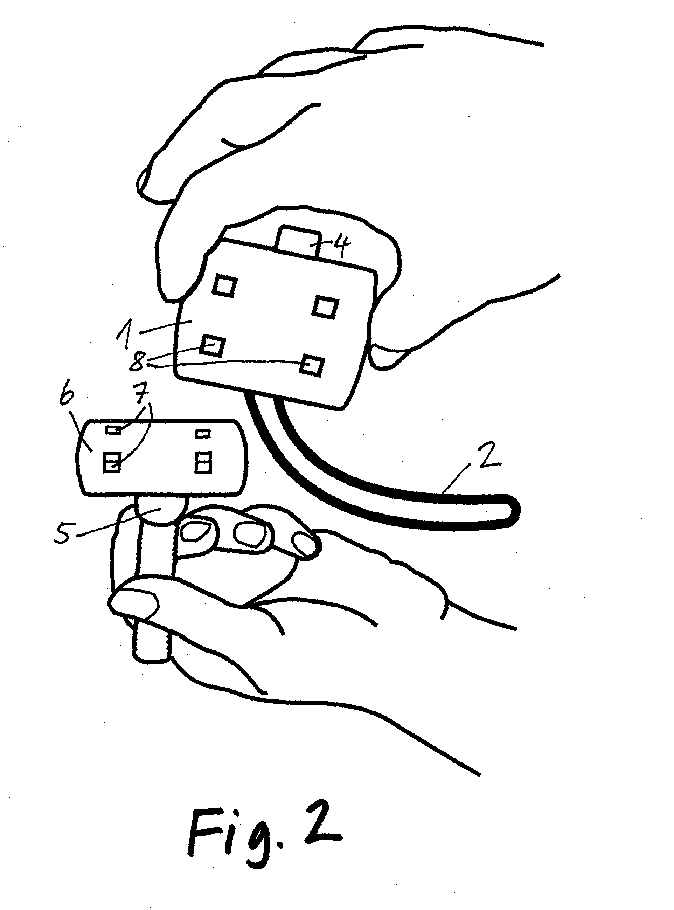

Die Fig. 2 bis 10 zeigen schrittweise die Handhabung des Sicherungselements. Dabei ist der Trägersockel 5 jeweils nur schematisch dargestellt, und zwar nicht an der Lenkstange eines Zweirads befestigt, sondern von einem Benutzer in der einen Hand gehalten.

In Fig. 2 hält der Benutzer in der einen Hand den Trägersockel 5 mit seiner Montageplatte 6, auf deren Oberseite vier Krallen 7 angeordnet sind, die komplementär zu den Aufnahme- und Rastöffnungen 2 an der Unterseite des Plattenkörpers 1 des Sicherungselements ausgebildet sind. In der anderen Hand hält der Benutzer das Sicherungselement, auf dessen Plattenkörper 1 nun die Oberseite mit den dort angeordneten Krallen 8 sichtbar ist, die gleich ausgebildet sind wie die Krallen 7 auf der Montageplatte 6 des Trägersockels 5.

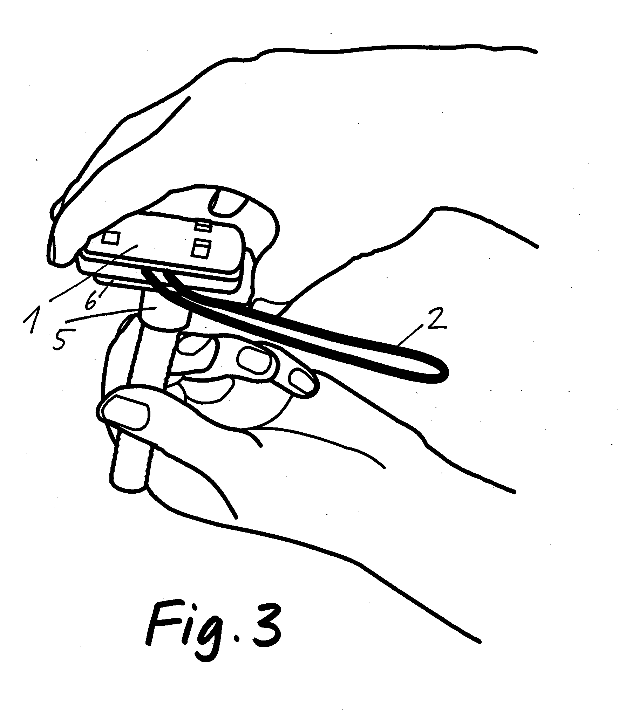

In Fig. 3 setzt der Benutzer den Plattenkörper 1 des Sicherungselements auf die Montageplatte 6 des Trägersockels 5 auf und verrastet diese durch Eingriff der Krallen 7 in den Aufnahme- und Rastöffnungen 2.

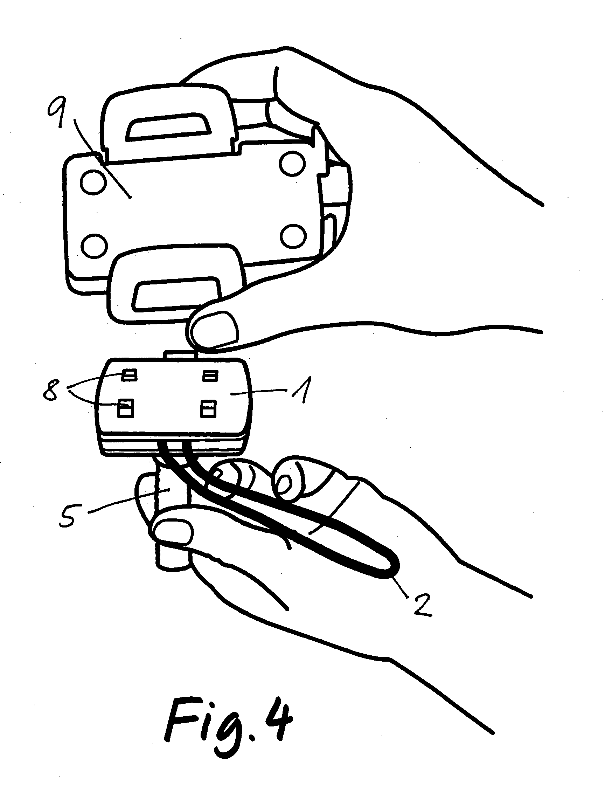

In Fig. 4 setzt nun der Benutzer einen Klemmbacken-Gerätehalter 9 auf den Plattenkörper 1 des Sicherungselements auf. Der Klemmbacken-Gerätehalter hat an seiner Unterseite Aufnahme- und Rastöffnungen, die gleich ausgebildet sind wie die Aufnahme- und Rastöffnungen 2 des Plattenkörpers 1, und der Benutzer verrastet den Klemmbacken-Gerätehalter so mit den Krallen 8 an der Oberseite des Plattenkörpers 1 des Sicherungselements.

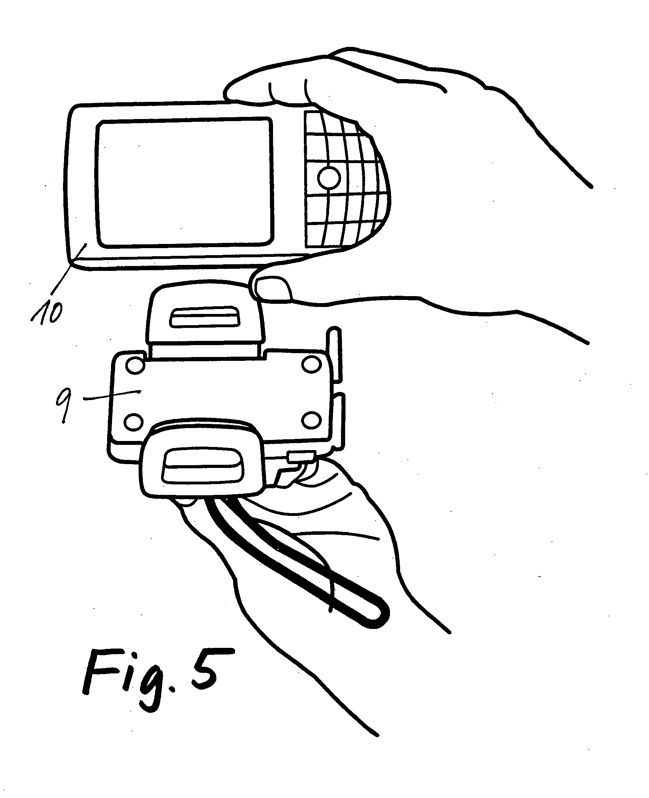

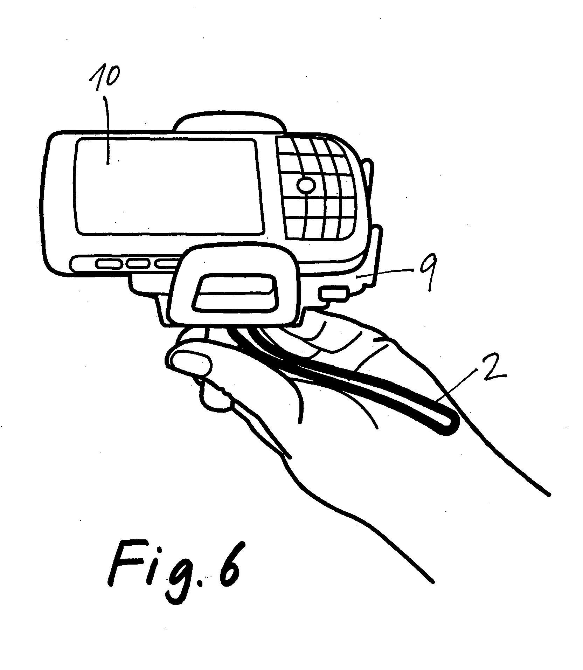

Fig. 5 zeigt nun das Einlegen des Geräts, z.B. eines Mobiltelefons, in den montierten Klemmbacken-Gerätehalter, und Fig. 6 zeigt den eingelegten und zwischen den Klemmbacken gehaltenen Zustand des Geräts 10.

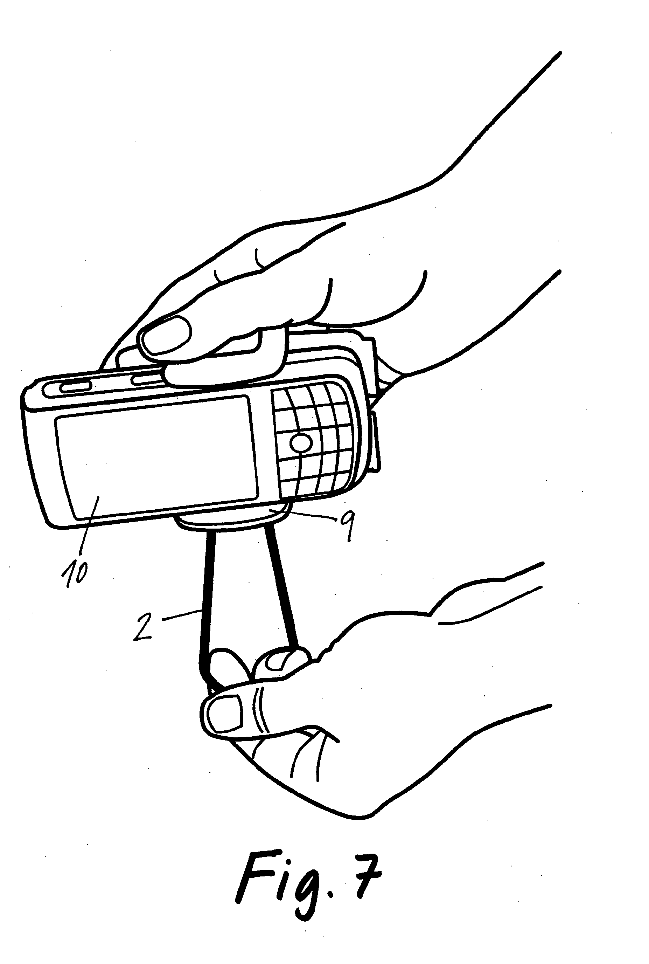

In Fig. 7 ergreift nun der Benutzer mit der einen Hand das Gummispannband 2, um das eingelegte und von den Klemmbacken des Klemmbacken-Gerätehalters 9 bereits gehaltene Gerät zu sichern.

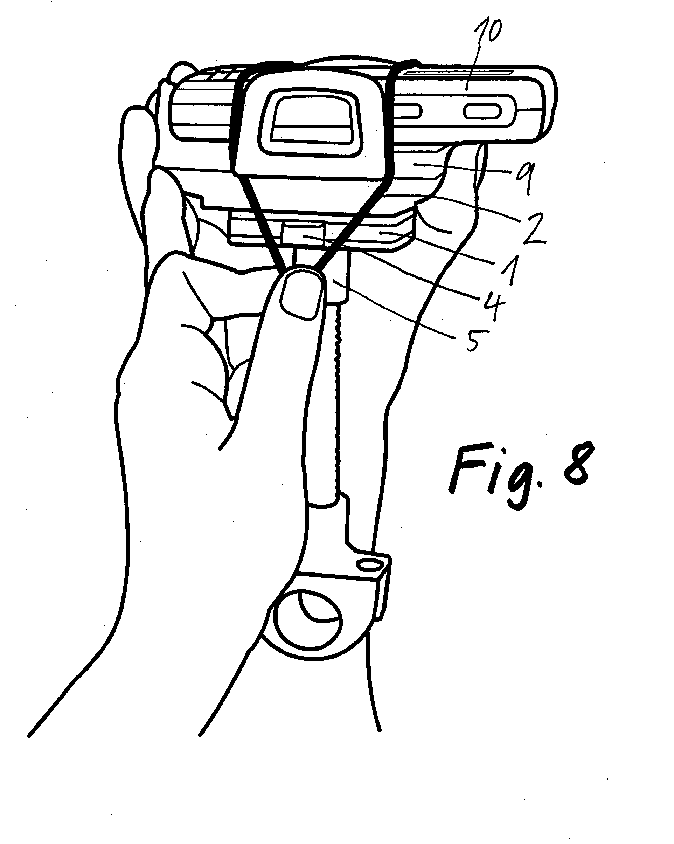

Fig. 8 zeigt, wie der Benutzer das Gummispannband 3 ergreift, um das bereits in den Klemmbacken-Gerätehalter 9 eingelegte und dort durch dessen Klemmbacken gehaltene Gerät 10 zu sichern.

Fig. 8 zeigt, wie der Benutzer das Gummispannband 3 des Sicherungselements in die am Plattenkörper 1 angeordnete Einhängenase 4 einhängt.

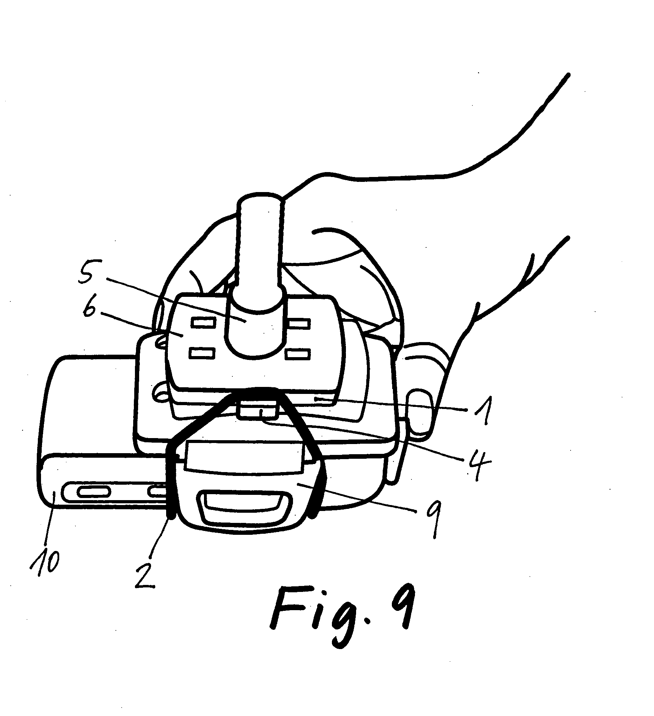

Fig. 9 zeigt den gesicherten Zustand des Geräts 10, wobei die Anordnung aus Trägersockel 5, Plattenkörper 1, Klemmbacken-Gerätehalter 9 und Gerät 10 in schräger Rückansicht sichtbar sind und das in die Einhängenase 4 eingehängte Gummispannband 3 erkennbar ist.

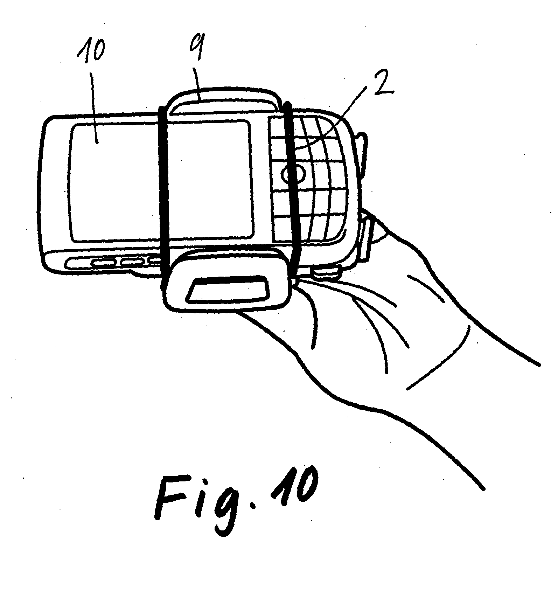

Fig. 10 schließlich zeigt die Anordnung mit dem durch das Gummispannband 2 gesicherten Gerät 10 in schräger Draufsicht.

## Patentansprüche

1. Zwischenbau-Sicherungselement für Zweirad-Geräteträger für Mobiltelefone, Navigationsgeräte und dgl., bestehend aus einem Zwischenbaukörper (1), der zwischen einen Trägersockel (5) und einen Gerätehalter (9) einzusetzen ist, wobei der Zwischenbaukörper (1) an einer Seite mit zu Kupplungselementen am Trägersockel komplementären Kupplungselementen (2) und auf seiner entgegengesetzten Seite mit zu Kupplungselementen am Gerätehalter (9) komplementären Kupplungselementen (8) versehen ist, und mit einem am Zwischenbaukörper (1) angeordneten Spannmittel (3), das über das im Gerätehalter (9) eingelegte Gerät (10) legbar und wiederum am Zwischenbaukörper fixierbar ist.

2. Zwischenbau-Sicherungselement nach Anspruch 1, wobei der Zwischenbaukörper (1) als Plattenkörper ausgebildet ist.

3. Zwischenbau-Sicherungselement nach Anspruch 1 oder 2, wobei das Spannmittel (2) als Gummispannband ausgebildet ist, das nach einer Seite vom Zwischenbaukörper (1) wegragt und mit seinem Ende an einem auf der entgegengesetzten Seite des Zwischenbaukörpers angeordneten Einhängeelement (4) einhängbar ist.
